# DEMANDE DE BREVET EUROPEEN

(11) **EP 1 566 331 A1**
(43) Date de publication de la demande: **24.08.2005**
(21) Numéro de dépôt: 05300078.2
(22) Date de dépôt: 01.02.2005
(51) Int. Cl.: B62M 3/08, B62K 19/16

(54) **Inserts de fixation pour pièces détachées de cycles et notamment des manivelles de pédaliers et pédaliers**

(30) Priorité: 18.02.2004 FR 0401694
(71) Demandeur: STRONGLIGHT S.A., 42000 Saint-Etienne (FR)
(72) Inventeur: Crozet, Raymond, 42100 Saint Etienne (FR); Jaligot, Michel, 42400 Chamond (FR)
(74) Mandataire: Dupuis, François

(57) **Abrégé**

Insert de fixation pour pièces détachées de cycles et notamment des manivelles de pédaliers et pédaliers, remarquable en ce qu'il est constitué en deux parties avec un insert inférieur (11-21-31-41) et un insert supérieur (12-22-32-42) qui sont agencés pour être assemblés l'un à l'autre et solidarisés par une liaison mécanique, chaque insert inférieur et supérieur présentant une collerette d'appui contre la face en regard de la pièce de cycle réceptrice du type manivelle notamment.

## Description

L'invention se rattache au secteur technique du cycle et de ses composants.

Les inserts actuellement utilisés pour les pièces de cycles, et en particulier pour les manivelles de pédaliers pour la fixation des crues de pédaliers et/ou des pédales, sont réalisés monobloc et intégrés et noyés lors du moulage de la manivelle lorsque celle-ci est en matière plastique, en carbone et en matériaux composites. L'insert peut aussi être rapporté et fixé par collage. L'insert présente à cet effet une collerette sur sa face avant qui vient en appui sur la face en regard de la manivelle. Cette mise en oeuvre couramment utilisée par les constructeurs présente cependant certains inconvénients, notamment dans la tenue et liaison de l'insert dans la manivelle. Il peut y avoir en effet des situations en fonction de la colle choisie de désolidarisation de l'insert et risque de perte de la manivelle.

La démarche du Demandeur a donc été d'améliorer la sécurisation du montage de l'insert dans la manivelle. En second lieu, le Demandeur a cherché à faciliter le montage et/ou démontage de l'insert dans la manivelle tout en sécurisant au maximum la liaison insert - manivelle.

Selon une première caractéristique de l'invention, l'insert de fixation pour pièces détachées de cycles et notamment des manivelles de pédaliers et pédaliers est remarquable en ce qu'il est constitué en deux parties avec un insert inférieur et un insert supérieur qui sont agencés pour être assemblés l'un à l'autre et solidarisés par une liaison mécanique, chaque insert inférieur et supérieur présentant une collerette d'appui contre la face en regard de la pièce de cycle réceptrice du type manivelle notamment.

Selon une autre caractéristique, l'insert comprend deux parties définissant un insert inférieur et un insert supérieur qui sont agencés avec des formes complémentaires pour être solidarisés par emmanchement forcé.

Selon une autre caractéristique, l'insert comprend deux parties définissant un insert inférieur et un insert supérieur qui sont agencés avec des formes complémentaires pour être solidarisés par vissage à l'aide d'un outil à main et autorisant leur rapprochement et verrouillage en position par rapport à la ou les cavités réceptrices de la manivelle.

Selon une autre caractéristique, l'insert comprend deux parties définissant un insert inférieur et un insert supérieur qui sont agencés avec des formes complémentaires pour être solidarisés par vissage, selon un pas de filet établi dans un sens, et en ce que l'insert supérieur est agencé à titre complémentaire avec une partie filetée complémentaire à pas de vis et filet inversé au précédent pour réceptionner l'extrémité libre filetée d'un outil à main pour le montage ou démontage de l'insert dans son ensemble.

Les caractéristiques telles que défmies et précisées dans la suite de la description répondent avec inconvénients de l'art antérieur en proposant une nouvelle solution de conception d'inserts selon différentes mises en oeuvre, selon deux objectifs : sécurisation dans la liaison insert-manivelle, facilité de montage des parties constitutives de l'insert avec un temps de montage court et fiabilisé et/ou de démontage.

Ces caractéristiques et d'autres encore ressortiront bien de la suite de la description.

Pour fixer l'objet de l'invention illustré d'une manière non limitative aux figures des dessins où :
- La figure 1 est une vue d'une manivelle de pédalier pour cycles dans le cadre d'une application de l'invention, avec le logement de l'insert de l'axe de pédalier et le logement de l'insert de l'axe d'entraînement du pédalier.
- La figure 2 est une vue en coupe longitudinale d'une première réalisation de l'insert selon l'invention, représenté avant montage pour l'axe de pédale.
- La figure 3 est une vue selon la figure 2 de l'insert après montage.
- La figure 4 est une vue représentant l'insert pour axe d'entraînement du pédalier sur une manivelle de pédalier selon une première mise en oeuvre.
- La figure 5 est une vue dans une seconde mise en oeuvre de l'insert pour axe d'entraînement de pédalier après assemblage des deux portées constitutives insert supérieur et insert inférieur.
- La figure 6 est une vue en coupe selon la ligne BB de la figure 7 de l'insert inférieur seul selon la première variante.
- La figure 7 est une vue de face de l'ensemble selon la figure 5.
- La figure 8 est une vue de profil de l'ensemble monté selon la figure 5.
- La figure 9 est une vue en coupe de l'insert supérieur seul.
- La figure 10 est une vue d'une troisième variante de réalisation de l'insert inférieur pour axe d'entraînement du pédalier, selon l'invention.
- La figure 11 est une vue en coupe longitudinale de l'insert inférieur selon la figure 10.
- La figure 12 illustre l'insert pris dans son ensemble selon la troisième variante dans l'application pour axe d'entraînement de pédalier.
- La figure 13 illustre l'outil de blocage et serrage de l'insert supérieur dans l'insert inférieur des seconde et troisième variantes précitées, l'outil étant représenté en deux demi-parties avant montage et en cours d'utilisation.

Afin de rendre plus concret l'objet de l'invention, on le décrit maintenant d'une manière non limitative illustrée aux figures des dessins.

Selon l'invention, l'insert en deux parties pour des pièces détachées de cycle est avantageusement applicable à des manivelles (M) de pédalier, et dans la suite de la description, on fera référence à cette application. Cependant, l'invention peut être applicable à toutes autres liaisons utilisables sur des pièces détachées de cycle incluant des inserts en deux parties.

Selon l'invention, l'insert pris dans son ensemble est référencé par (10, 20, 30, 40). Selon les quatre variantes décrites pour la fixation d'axes de pédales et d'axes d'entraînement de pédaliers, l'insert comprend deux parties appelées insert inférieur (11, 21, 31, 41) et insert supérieur (12, 22, 32, 42) qui sont destinées à être accouplés et solidarisés ensemble par une liaison mécanique.

On décrira dans la suite de la description successivement les quatre variantes conçues à partir du même concept de base d'un insert en deux parties.

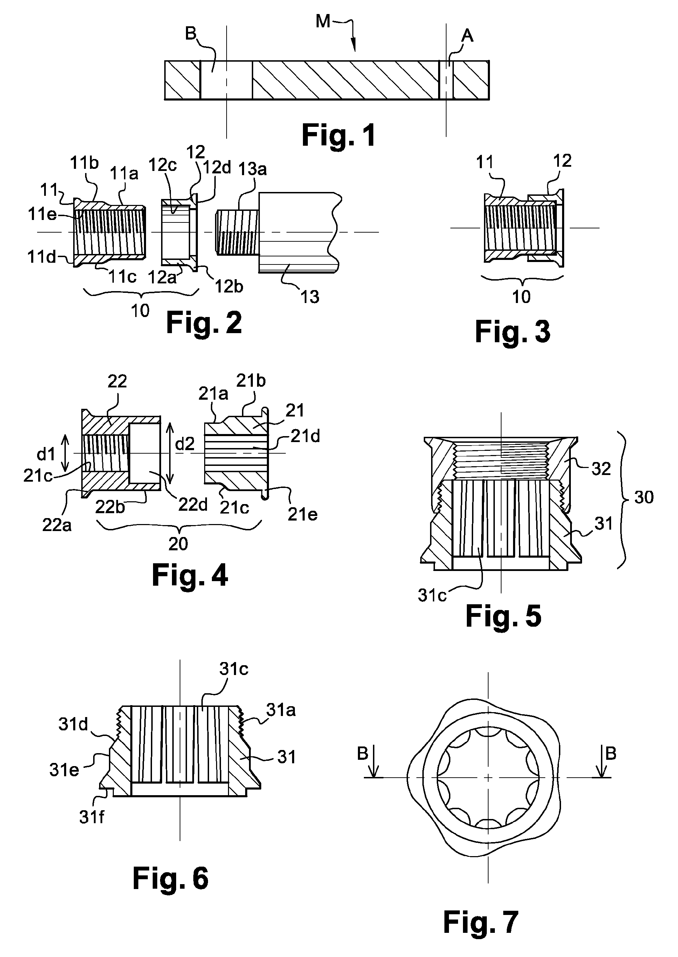

On se réfère à la première variante illustrée aux figures 2 et 3 dans l'application à la réalisation d'un insert (10) pour axe de pédale. L'insert (10) comprend ainsi un insert inférieur (11) et un insert supérieur (12). L'insert inférieur (11) comprend deux portées (11a-11b) cylindriques successives de diamètre différent et défmissant entre elles une zone de butée (11c), la portée de grand diamètre se prolongeant par une collerette (11d) susceptible de venir en appui sur la face en regard de la manivelle. Intérieurement, l'insert inférieur présente un taraudage (11e) sur toute sa longueur. L'insert supérieur (12) présente une portée extérieure cylindrique (12a) suivie d'une collerette (12b) de contre-appui sur la face en regard de la manivelle. Intérieurement, l'insert supérieur présente un alésage lisse (12c) et côté collerette un rétrécissement (12d) formant butée. Ainsi, l'insert supérieur vient s'enfiler pour coulissement sur la portée réceptrice (11a) de l'insert inférieur. La mise en place de l'insert dans le logement (A) correspondant de la manivelle s'effectue de la manière suivante : insertion de l'insert inférieur et pénétration de l'insert supérieur dans le logement, utilisation d'un outil (13) à extrémité filetée (13a) qui est engagée côté insert supérieur pour s'ajuster dans le taraudage de l'insert inférieur en provoquant la mise en place de l'insert supérieur jusqu'à venir en butée d'appui sur les parties (12d) et (11c) respectivement. Dans cette situation, les collerettes formées sur les inserts inférieurs et supérieurs s'engagent fermement en appui sur les faces en regard de la manivelle.

On se réfère maintenant à la seconde variante illustrée figure 4 dans l'application à la réalisation d'un insert en deux parties pour axe d'entraînement de pédalier.

L'insert est référencé dans son ensemble par (20) et inclut un insert inférieur (21) et un insert supérieur (22).

L'insert (21) est agencé intérieurement avec des cannelures, carrés, cônes ou similaires (21d) coopérant avec ledit axe d'entraînement, agencé de manière complémentaire pour assurer la liaison et fixation. L'insert inférieur (21) présente sur sa périphérie extérieure deux portées successives (21a-21b) de diamètre décroissant avec un épaulement (21c) et une collerette (21e). La portée (21b) de grand diamètre se situe côté entrée de l'insert, et est emmanchée dans le logement correspondant de la manivelle en étant solidarisée par collage. L'autre portée (21b) permet la réception d'un insert supérieur (22) qui est susceptible d'être engagé par l'autre côté de la manivelle. Cet insert supérieur présente une collerette (22a) d'appui sur la face en regard de la manivelle, une portée extérieure (22b) lisse et intérieurement un taraudage (22c) de diamètre (d1) et un alésage (22d) suivant de plus grand diamètre (d2) susceptible de s'engager sur la portée (21b) de l'insert. La liaison des inserts supérieur et inférieur s'effectue par emmanchement forcé de l'un sur l'autre.

Il convient de décrire maintenant les troisième et quatrième variantes de mise en oeuvre de l'invention dans leur application à la réalisation d'un insert en deux parties pour axe d'entraînement de pédalier.

Selon l'invention, l'insert est référencé dans son ensemble par (30-40) et comprend un insert inférieur (31-41) et un insert supérieur (32-42). La mise en place des inserts l'un par rapport à l'autre s'effectuant par action de montage ou démontage rapide à l'aide d'un outil à main (13) spécifique à l'invention. La mise en oeuvre de l'invention s'effectue grâce à l'agencement de l'insert inférieur (31-41) avec une portée filetée (31a-41a) qui coopère avec une première portée (32a-42a) filetée établie sur l'insert supérieur selon un premier pas avec filet de vissage dans un sens, tandis que ledit insert supérieur présente une seconde portée (42b) selon un second pas de filet à sens inversé au précédent. L'insert inférieur (31-41) ou l'insert supérieur (32-42) présente une zone périphérique (31b-41c) de grande longueur susceptible d'être encollée pour être fixée et solidarisée au corps de la manivelle (M). L'outil à main (13) présente un manche avec une extrémité filetée (13a) susceptible de s'engager dans l'insert supérieur sur sa seconde portée (32b-42b) pour assurer le vissage de l'insert supérieur et son dévissage par rapport à l'insert inférieur.

Selon l'invention, deux mises en oeuvre de l'insert sont possibles, correspondant aux troisième et quatrième variantes, en se référant aux figures 5 à 9 pour la première, et 10 à 12 pour la seconde.

Selon la troisième variante, l'insert inférieur (31) présente de manière connue et intérieurement un crantage, carré, cône ou similaire (31c) pour assurer la mise en place et entraînement de l'axe de pédalier non représenté. L'insert (31) présente sa portée filetée (31a) en périphérie extérieure, ladite portée étant établie sur une partie seulement de la longueur de l'insert inférieur avec une face de butée (31d) et une portée périphérique (31e) adjacente, venant jusqu'à l'extrémité avant de l'insert avec une collerette d'appui (31f). La portée (31a) est établie selon un pas de vis avec filet dans un sens. L'insert supérieur (32) est alors agencé avec à son extrémité avant avec une collerette d'appui (32d) sur la face en regard de la manivelle et une portée extérieure périphérique (32c) de grande longueur et constituant une surface d'encollage. Intérieurement, l'insert supérieur comprend deux portées filetées (32a-32b) taraudées, de diamètre différent en délimitant ainsi un épaulement de butée (32f). La première portée filetée ou taraudée (32a) de grand diamètre se trouve à l'arrière de l'insert supérieur et présente un pas tel que l'ajustement sur la portée (31a) de l'insert inférieur soit possible. La seconde portée filetée ou taraudée (32b) de l'insert supérieur se trouve donc côté avant de l'insert supérieur, et présente un pas de vis à filet inversé au précédent. Cette portée (32b) est susceptible de recevoir à montage rapide et démontage l'extrémité filetée de l'outil à main (13). Ainsi, le montage de l'ensemble s'effectue de la manière suivante. L'insert inférieur est préalablement disposé dans son logement prévu à cet effet dans la manivelle. L'utilisateur positionne l'outil à main dans l'insert supérieur (32) selon un premier sens de pas de vis à filets inversés, puis par suite de son maintien, ledit insert supérieur est alors vissé sur l'insert inférieur selon l'autre pas de vis en sens inversé. On obtient ainsi un blocage parfait de l'ensemble. L'insert supérieur étant préencollé ou le logement étant préencollé, la liaison fmale est obtenue et il n'y a aucun risque de séparation des inserts l'un par rapport à l'autre, qui sont verrouillés l'un à l'autre. Il peut être prévu la dépose de matières adhésives complémentaires du type colle si besoin est, sur la portée (31a) de l'insert inférieur et/ou de la portée jouxtant sa face avant. L'enlèvement de l'outil s'effectue par une manoeuvre inverse de ce dernier, ce qui permet de l'enlever de l'insert ainsi constitué.

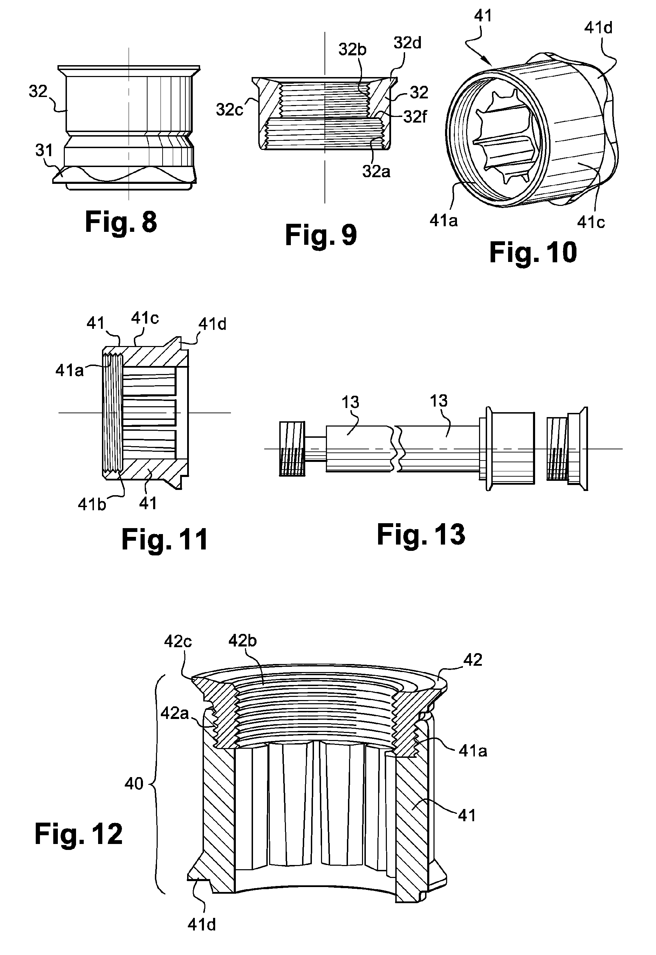

Dans la quatrième variante représentée aux figures 10 à 12, l'insert inférieur (41) est de plus grande longueur et comprend toujours intérieurement des crans, carrés, cônes ou similaires, de liaison et d'entraînement avec l'axe de pédalier. Ledit insert inférieur comprend une portée filetée coopérant avec l'insert supérieur (42) qui est cette fois intérieure, c'est-à-dire en faisant apparaître un taraudage (41a) selon un premier pas de vis dans un sens. Ce taraudage est établi à partir de la face arrière de l'insert inférieur sur une petite longueur de l'insert avec un épaulement de butée (41b). Extérieurement, l'insert inférieur présente une face périphérique lisse (41c) de grande longueur permettant l'encollage. L'insert supérieur (42) solidarisé à l'insert inférieur comprend dans cette configuration une première portée (42a) filetée qui est établie sur sa périphérie extérieure pour coopérer avec la partie taraudée (41a) de l'insert inférieur selon un pas de filet correspondant. L'insert supérieur présente ensuite une seconde portée (42b) qui est en fait taraudée intérieurement selon un autre pas et filet à sens inversé pour recevoir l'outil (13). L'insert présente aussi une collerette d'appui (42c). Le mode de montage reste le même que celui indiqué précédemment.

On obtient ainsi pour cette quatrième réalisation les mêmes effets que ceux de la première variante. Pour les troisième et quatrième variantes, et dans l'hypothèse où il y aurait un intérêt à démonter l'insert (30-40) ainsi constitué, il suffirait d'assurer une opération de chauffe partielle de la zone de réception de l'insert pour rendre liquide la colle de liaison et permettre ensuite le démontage rapide à l'aide de l'outil (13) de l'insert correspondant.

Les avantages ressortent bien de l'invention. On souligne la nouvelle conception de l'insert en deux parties, et l'originalité particulière du choix d'une liaison mécanique des composants, de sorte que le montage et/ou démontage est très facile. Cela permet aussi de rigidifier la liaison des inserts inférieur et supérieur avec un effort de serrage approprié.

## Revendications

1. Insert de fixation (10-20-30-40) pour pièces détachées de cycles et notamment des manivelles de pédaliers et pédaliers, **caractérisé en ce qu'**il est constitué en deux parties avec un insert inférieur (11-21-31-41) et un insert supérieur (12-22-32-42) qui sont agencés pour être assemblés l'un à l'autre et solidarisés par une liaison mécanique, chaque insert inférieur et supérieur présentant une collerette d'appui contre la face en regard de la pièce de cycle réceptrice du type manivelle notamment.

2. Insert selon la revendication 1, **caractérisé en ce que** ledit insert (20) comprend deux parties défmissant un insert inférieur (21) et un insert supérieur (22) qui sont agencés avec des formes complémentaires pour être solidarisés par emmanchement forcé.

3. Insert selon la revendication 1, **caractérisé en ce que** ledit insert (10) comprend deux parties défmissant un insert inférieur (11) et un insert supérieur (12) qui sont agencés avec des formes complémentaires pour être solidarisés par vissage à l'aide d'un outil à main (13) et autorisant leur rapprochement et verrouillage en position par rapport à la ou les cavités réceptrices de la manivelle.

4. Insert selon la revendication 1, **caractérisé en ce que** ledit insert (30-40) comprend deux parties définissant un insert inférieur (31-41) et un insert supérieur (32-42) qui sont agencés avec des formes complémentaires pour être solidarisés par vissage, selon un pas de filet établi dans un sens, et **en ce que** l'insert supérieur (32-42) est agencé à titre complémentaire avec une partie filetée complémentaire à pas de vis et filet inversé au précédent pour réceptionner l'extrémité libre filetée d'un outil à main (13) pour le montage ou démontage de l'insert dans son ensemble.

5. Insert selon la revendication 3, **caractérisé en ce que** l'insert inférieur (11) comprend deux portées (11a-11b) cylindriques successives de diamètre différent et défmissant entre elles une zone de butée (11c), la portée de grand diamètre se prolongeant par une collerette (11d) susceptible de venir en appui sur la face en regard de la manivelle, et **en ce que** intérieurement, l'insert inférieur présente un taraudage (11e) sur toute sa longueur, et **en ce que** l'insert supérieur (12) présente une portée extérieure cylindrique (12a) suivie d'une collerette (12b) de contre-appui sur la face en regard de la manivelle, et **en ce que** intérieurement, l'insert supérieur présente un alésage lisse (12c) et côté collerette un rétrécissement (12d) formant butée, et **en ce que** l'insert supérieur vient s'enfiler pour coulissement sur la portée réceptrice (11a) de l'insert inférieur lors de l'action de lissage de l'outil (13).

6. Insert selon la revendication 2, **caractérisé en ce que** l'insert inférieur (21) présente sur sa périphérie extérieure deux portées successives (21a-21b) de diamètre décroissant avec un épaulement (21c) et une collerette (21 e), et **en ce que** la portée (21b) de grand diamètre se situe côté entrée de l'insert, et est emmanchée dans le logement correspondant de la manivelle en étant solidarisée par collage, et **en ce que** l'autre portée (21b) permet la réception d'un insert supérieur (22) qui est susceptible d'être engagé par l'autre côté de la manivelle, et **en ce que** l'insert supérieur présente une collerette (22a) d'appui sur la face en regard de la manivelle, une portée extérieure (22b) lisse et intérieurement un taraudage (22c) de diamètre (d1) et un alésage (22d) suivant de plus grand diamètre (d2) susceptible de s'engager sur la portée (21b) de l'insert.

7. Insert selon la revendication 4, **caractérisé en ce que** l'insert inférieur (31-41) est agencé avec une portée filetée (31a-41a) qui coopère avec une première portée (32a-42a) filetée établie sur l'insert supérieur (32-42) selon un premier pas avec filet de vissage dans un sens, tandis que ledit insert supérieur présente une seconde portée (32b-42b) selon un second pas de filet à sens inversé au précédent, et **en ce que** l'insert inférieur (31-41) ou l'insert supérieur (32-42) présente une zone périphérique (31b-41c) de grande longueur susceptible d'être encollée pour être fixée et solidarisée au corps de la manivelle (M), et **en ce que** l'outil à main (13) présente un manche (13b) avec une extrémité filetée (13a) susceptible de s'engager dans l'insert supérieur sur sa seconde portée (32b-42b) pour assurer le vissage de l'insert supérieur et son dévissage par rapport à l'insert inférieur.

8. Insert selon la revendication 7, **caractérisé en ce que** l'insert inférieur (31) présente sa portée filetée (31a) en périphérie extérieure, ladite portée étant établie sur une partie seulement de la longueur de l'insert inférieur avec une face de butée (31 d) et une portée périphérique (31 e) adjacente avec collerette (31f), venant jusqu'à l'extrémité avant de l'insert, et **en ce que** la portée (31a) est établie selon un pas de vis avec filet dans un sens, et **en ce que** l'insert supérieur (32) est agencé avec à son extrémité avant avec une collerette d'appui (32d) sur la face en regard de la manivelle et une portée extérieure périphérique (32c) de grande longueur et constituant une surface d'encollage, et **en ce que** intérieurement, l'insert supérieur comprend deux portées filetées (32a-32b) taraudées, de diamètre différent en délimitant ainsi un épaulement de butée (32f), et **en ce que** la première portée filetée ou taraudée (32a) de grand diamètre se trouve à l'arrière de l'insert supérieur et présente un pas tel que l'ajustement sur la portée (31a) de l'insert inférieur soit possible, et **en ce que** la seconde portée filetée ou taraudée (32b) de l'insert supérieur se trouve donc côté avant de l'insert supérieur, et présente un pas de vis à filet inversé au précédent, et **en ce que** la portée (32b) est susceptible de recevoir à montage rapide et démontage l'extrémité filetée (13a) de l'outil à main (13).

9. Insert selon la revendication 7, **caractérisé en ce que** l'insert inférieur (41) comprend une portée filetée coopérant avec l'insert supérieur (42) qui est intérieure, c'est-à-dire en faisant apparaître un taraudage (41a) selon un premier pas de vis dans un sens, et **en ce que** ce taraudage est établi à partir de la face arrière de l'insert inférieur sur une petite longueur de l'insert avec un épaulement de butée (41b), et **en ce que** extérieurement, l'insert inférieur présente une face périphérique lisse (41c) de grande longueur permettant l'encollage, et **en ce que** l'insert supérieur (42) solidarisé à l'insert inférieur comprend dans cette configuration une première portée (42a) filetée qui est établie sur sa périphérie extérieure pour coopérer avec la partie taraudée (41a) de l'insert inférieur selon un pas de filet correspondant et une collerette d'appui (42c), et **en ce que** l'insert supérieur présente ensuite une seconde portée (42b) qui est en fait taraudée intérieurement selon un autre pas et filet à sens inversé pour recevoir l'outil (13).
